# EUROPEAN PATENT APPLICATION

(11) **EP 4 586 182 A1**
(43) Date of publication of application: **16.07.2025**
(21) Application number: 22965547.7
(22) Date of filing: 18.11.2022
(51) Int. Cl.: G06T 3/00, H04N 13/296

(54) **PANORAMIC UNMANNED AERIAL VEHICLE**

(71) Applicant: Arashi Vision Inc., Shenzhen, Guangdong 518000 (CN)
(72) Inventor: ZHANG, Guilin, Shenzhen, Guangdong 518000 (CN); PANG, Fanli, Shenzhen, Guangdong 518000 (CN); GAO, Fei, Shenzhen, Guangdong 518000 (CN); LIU, Jingkang, Shenzhen, Guangdong 518000 (CN)
(74) Representative: Michalski Hüttermann & Partner Patentanwälte mbB
(86) International application number: PCT/CN2022/132742
(87) International publication number: WO 2024/103366

(57) **Abstract**

A panoramic UAV includes: a body, including a top shell, a bottom shell, and a side shell connected between the top shell and the bottom shell, where the bottom shell includes a supporting surface away from the top shell, and the side shell includes a first side shell and a second side shell arranged opposite to each other; a plurality of arms, connected to the first side shell and the second side shell, the plurality of arms having an unfolded mode; a first fisheye lens, arranged on the top shell, the first fisheye lens having a first field of view region and a first stitching region not exceeding the range of the first field of view region; a second fisheye lens, arranged on the bottom shell and located completely between the top shell and the plane where the supporting surface is located, the second fisheye lens having a second field of view region and a second stitching region not exceeding the range of the second field of view region; and a region not covered by the first stitching region and not covered by the second stitching region forms a stitching blind area. When the plurality of arms are in the unfolded mode, remaining components of the panoramic UAV other than the first fisheye lens and the second fisheye lens are located within the stitching blind area.

## Description

### Technical Field

The present disclosure relates to the field of Unmanned Aerial Vehicles (UAVs), and more particularly, to a panoramic UAV.

### Background

UAVs capture videos using lenses mounted on their bodies. To obtain panoramic images or videos, multiple lenses are typically protruded from the top or bottom of the UAV body. Although protruding lenses provide a better field of view, they are prone to damage when the UAV lands, as the lenses may come into contact or collide with the ground or a tabletop. To prevent damage to the lenses during landing, two common solutions are employed:

A retractable support frame is installed on the body floor. During shooting, the support frame retracts into the body, and during landing, the support frame extends to support the UAV on the ground or tabletop, thereby preventing the lenses from contacting the surface.

A telescopic mechanism connected to the body allows the lenses to retract into the body. During shooting, the lenses extend out of the body, and during landing, the lenses retract into the body, thereby avoiding contact with the ground or tabletop.

Although these two solutions can prevent lens damage, the addition of both a support frame and a telescopic mechanism increase the weight of the UAV body. Increased weight reduces the UAV's endurance time when operating with the same battery capacity.

### Summary

Based on the above, there is a need to provide a panoramic UAV that achieves a panoramic field of view while improving the UAV's endurance time.

A panoramic UAV includes:
a body, including a top shell, a bottom shell, and a side shell connected between the top shell and the bottom shell, where the bottom shell includes a supporting surface away from the top shell, and the side shell includes a first side shell and a second side shell arranged opposite to each other;
a plurality of arms, connected to the first side shell and the second side shell, the plurality of arms having deployed mode;
a first fisheye lens, arranged on the top shell, the first fisheye lens having a first field of view region and a first stitching region not exceeding the range of the first field of view region;
a second fisheye lens, arranged on the bottom shell and located completely between the top shell and the plane where the supporting surface is located, the second fisheye lens having a second field of view region and a second stitching region not exceeding the range of the second field of view region,
a region not covered by either the first stitching region or the second stitching region forming a stitching blind area,
where when the plurality of arms are in the deployed mode, parts of the panoramic UAV other than the first fisheye lens and the second fisheye lens are located within the stitching blind area.

In one implementation, the panoramic UAV includes a battery and a main control board. The first fisheye lens and the second fisheye lens are located at one end of the panoramic UAV, and the battery and/or the main control board are located at the other end of the panoramic UAV.

In one implementation, the bottom shell includes a base shell and a supporting part arranged on the base shell, a surface of the supporting part away from the base shell is the supporting surface.

In one implementation, the supporting part includes a first supporting part and a second supporting part. The first supporting part is located between the second fisheye lens and the second supporting part. The center of gravity of the panoramic UAV is located between the first supporting part and the second supporting part. The distance between the supporting surface of the second supporting part and the base shell is less than the distance between the supporting surface of the first supporting part and the base shell.

In one implementation, the plurality of arms include two first arms. The two first arms are respectively connected to the first side shell and the second side shell. A surface of each first arm at an end away from the top shell is a grounding surface. In the deployed mode, the grounding surface is coplanar with the supporting surface of the first supporting part.

In one implementation, the plurality of arms further include two second arms. The two second arms are respectively connected to the first side shell and the second side shell. The two second arms are arranged closer to the top shell than the two first arms. The two first arms are located on a side of the first supporting part away from the second fisheye lens, and the two second arms are located on a side of the first supporting part close to the second fisheye lens.

In one implementation, the plurality of arms are foldably connected to the first side shell and the second side shell. The plurality of arms also have a stowed mode. When the plurality of arms are in the stowed mode, the second fisheye lens is located between the two first arms, and the grounding surface is located between the supporting surface of the first supporting part and the top shell.

In one implementation, each arm includes a rotating arm rotatably connected to the side shell and a blade rotatably connected to an end of the rotating arm away from the side shell. In the stowed mode, the rotating arm of the first arm and the rotating arm of the second arm rotate towards each other and close to their respective side shells.

In one implementation, the number of the first supporting part and the number of the second supporting part are both two, and the two first supporting parts and the two second supporting parts are respectively located on two sides of the second fisheye lens.

In one implementation, the bottom shell includes a first base shell part and a second base shell part. The second base shell part is connected to the first base shell part and inclined towards the top shell. The second fisheye lens is arranged on the second base shell part.

In one implementation, the second base shell part is a concave curved surface or an inclined surface, and a central axis of the second fisheye lens coincides with a normal vector of the second base shell part.

In one implementation, the top shell includes a first top shell part, a second top shell part, and a third top shell part. The second top shell part is recessed between the first top shell part and the third top shell part. A portion of the third top shell part farthest from the plane where the supporting surface is located is closer to the plane where the supporting surface is located than a portion of the first top shell part farthest from the plane where the supporting surface is located. The first fisheye lens is convexly arranged on the portion of the first top shell part farthest from the plane where the supporting surface is located and is inclined towards the third top shell part.

In one implementation, the first top shell part and the third top shell part are convex curved surfaces, and the second top shell part is a concave curved surface.

In one implementation, a central axis of the first fisheye lens coincides with a central axis of the second fisheye lens.

In one implementation, the body further includes a front shell. The front shell is connected to the top shell and the bottom shell at an end close to the second fisheye lens. The front shell is a convex curved surface.

The panoramic UAV described above, when in the deployed mode, has parts other than the first fisheye lens and the second fisheye lens located within the stitching blind area, so that the first fisheye lens and the second fisheye lens are not obstructed during shooting, thereby achieving panoramic shooting. Additionally, the panoramic UAV positions the second fisheye lens on the bottom shell completely between the plane where the top shell is located and the plane where the supporting surface of the bottom shell is located. When the panoramic UAV lands, the supporting surface contacts the landing surface, such as the ground or a tabletop, and the second fisheye lens does not contact the landing surface, thereby protecting the second fisheye lens. Compared with panoramic UAVs in the related art that protect the lens by setting a telescopic structure, the panoramic UAV described above has a simple structure for protecting the second fisheye lens, reducing the overall weight of the panoramic UAV, and thereby improving the endurance time of the panoramic UAV.

Other features, objectives, and advantages of the present disclosure will become apparent from the following detailed description and accompanying drawings.

### Brief Description of Drawings

Further understanding of the nature and advantages of specific implementations can be achieved by referring to the remainder of the specification and the drawings, in which similar reference numerals are used to refer to similar components. In some cases, sub-reference numerals are associated with reference numerals to indicate one of a plurality of similar components. When reference is made to a reference numeral without specifying a sub-reference numeral, it is intended to refer to all such similar components.
FIG. 1 is a perspective view of a panoramic UAV in the deployed mode of the arms according to one implementation.
FIG. 2 is another perspective view of the panoramic UAV in FIG. 1.
FIG. 3 is a side view of the panoramic UAV in FIG. 1 with the arms in the deployed mode.
FIG. 4 is a perspective view of the panoramic UAV in FIG. 1 with the arms in the stowed mode.
FIG. 5 is a schematic diagram of the field of view regions and stitching regions of the fisheye lenses in the panoramic UAV in FIG. 1.
FIG. 6 is a side view of the panoramic UAV in FIG. 4 with the arms in the stowed mode.
FIG. 7 is a schematic diagram of the panoramic UAV in FIG. 1 during flight.

### Detailed Description

The following description, in conjunction with the accompanying drawings of the implementations of the present disclosure, provides a clear and complete description of the technical solutions in the implementations of the present disclosure. It is evident that the described implementations are only part of the implementations of the present disclosure, not all of them. Based on the implementations in the present disclosure, all other implementations obtained by those skilled in the art without creative efforts fall within the scope of protection of the present disclosure.

The detailed description below shows some exemplary implementations in more detail to enable those skilled in the art to practice such implementations. The implementations described are provided only for illustrative purposes and are not intended to limit the scope of the present disclosure.

In the following description, certain details are set forth for the purpose of providing a thorough understanding of the implementations described. However, it will be apparent to those skilled in the art that the present disclosure may be practiced without some of these specific details. In other instances, certain structures and devices are shown in a block diagram form. Several implementations are described herein, and although various features are attributed to different implementations, it should be understood that features described concerning one implementation can also be combined with other implementations. However, for the same reasons, one or more features of any described implementation should not be considered essential to every implementation of the present disclosure, as other implementations of the present disclosure may omit these features.

Unless otherwise stated, all numbers, dimensions, etc., used herein should be understood as being modified by the term "about" in all instances. In the present disclosure, the use of the singular term includes the plural term unless otherwise explicitly stated, and the use of the terms "and" and "or" indicates "and/or" unless otherwise stated. Moreover, the term "comprising" and other forms such as "includes" and "contains" should be considered non-exclusive. Additionally, unless specifically stated otherwise, terms such as "element" or "component" encompass elements and components that include a single unit and those that include more than one unit.

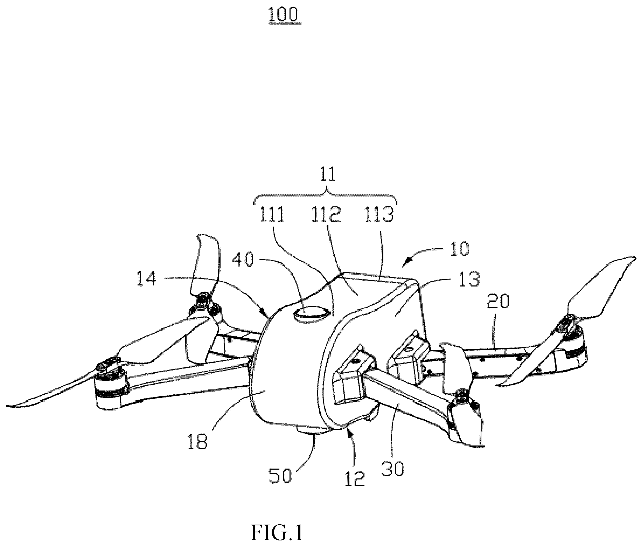

Please refer to FIGs. 1 to 3. According to one implementation of the present disclosure, a panoramic UAV 100 is provided. The panoramic UAV 100 can perform panoramic shooting and lens protection without setting up a support frame or lens telescopic structure, thereby reducing the overall weight of the panoramic UAV 100 and enhancing the endurance time of the panoramic UAV 100.

The panoramic UAV 100 includes a body 10, a plurality of arms (e.g., the first arm 20, the second arm 30), a first fisheye lens 40, and a second fisheye lens 50. The body 10 includes a top shell 11, a bottom shell 12, and a side shell (not specifically annotated with reference numeral) connected between the top shell 11 and the bottom shell 12. The bottom shell 12 includes a supporting surface 15 away from the top shell 11. The side shell includes a first side shell 13 and a second side shell 14 arranged opposite to each other. The plurality of arms are connected to the first side shell 13 and the second side shell 14, and the plurality of arms have a deployed mode and a stowed mode.

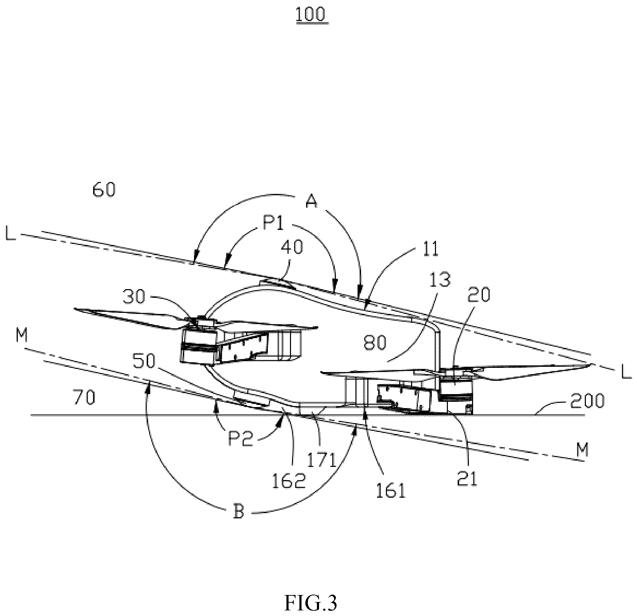

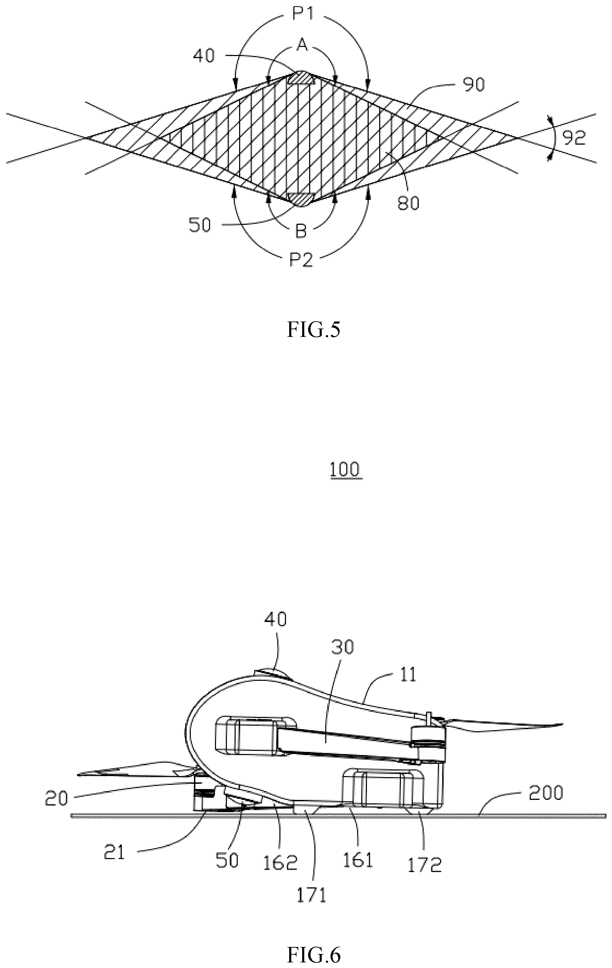

Please refer to FIGs. 3 and 5. The first fisheye lens 40 is arranged on the top shell 11. The first fisheye lens 40 includes a first field of view region A and a first stitching region P1, where the first field of view region A and the first stitching region P1 are both greater than 180°, and the first stitching region P1 does not exceed the range of the first field of view region A (for example, in this implementation, the first field of view region A is 210°, and the first stitching region P1 is 190°). Therefore, it has a first field of view region 60 defined by the top shell 11 and a first stitching region not exceeding the range of the first field of view region 60 (not marked). FIG. 3 shows the first field of view region 60. Since FIG. 3 is a side view of the panoramic UAV 100 in the deployed mode, the first field of view region 60 includes the area above line L. However, those skilled in the art should understand from FIG. 1 that the first field of view region 60 is essentially a partial spherical region located on the side of the mirror surface of the first fisheye lens 40 away from the bottom shell 12. The first stitching region is also a partially spherical region located on the side of the mirror surface of the first fisheye lens 40 away from the bottom shell 12 and is entirely within the range of the first field of view region 60. The second fisheye lens 50 is arranged on the bottom shell 12 and is located completely between the top shell 11 and the plane where the supporting surface 15 is located. Similarly, the second fisheye lens 50 includes a second field of view region B and a second stitching region P2, where the second field of view region B and the stitching region angle are both greater than 180°, and the second stitching region P2 does not exceed the range of the second field of view region B (for example, in this implementation, the second field of view region B is 210°, and the second stitching region P2 is 190°). Therefore, it has a second field of view region 70 defined by the bottom shell 12 and a second stitching region not exceeding the range of the second field of view region 70 (not marked). FIG. 3 shows the second field of view region 70. Similar to the first field of view region 60, the second field of view region 70 includes the area below line M. However, those skilled in the art should understand from FIG. 1 that the second field of view region 70 is essentially a partially spherical region located on the side of the mirror surface of the second fisheye lens 50 away from the top shell 11. The second stitching region is also a partial spherical region located on the side of the mirror surface of the second fisheye lens 50 away from the top shell 11 and is entirely within the range of the second field of view region 70. As the field of view angles A and B of the first fisheye lens 40 and the second fisheye lens 50 are both greater than 180°, the first field of view region 60 can intersect with the second field of view region 70 to form an overlapping area (not shown in the figure) and a stitching blind area 80. The overlapping area refers to the area that both the second field of view region 70 and the first field of view region 60 can cover, and the stitching blind area 80 refers to the area that neither the second field of view region 70 nor the first field of view region 60 can cover. Similarly, as the first stitching region angle P1 and the second stitching region angle P2 are both greater than 180°, the first stitching region and the second stitching region intersect to form a stitching angle region 92, and the area not covered by either the first stitching region or the second stitching region forms the stitching blind area 90.

In one scheme of this implementation, the first field of view angle A of the first fisheye lens and the first stitching region angle P1 are the same, and the second field of view angle B of the second fisheye lens and the first stitching region angle P1 are the same. At this time, the stitching blind area 80 and the stitching blind area 90 are the same, and the plurality of arms are located within the stitching blind area 80 of the first fisheye lens 40 and the second fisheye lens 50 in the deployed mode. Therefore, the first fisheye lens 40 and the second fisheye lens 50 will not be blocked by any arm during shooting, so the images taken by the first fisheye lens 40 and the second fisheye lens 50 at the same time can be synthesized into a panoramic image, thereby achieving panoramic shooting. In another scheme of this implementation, the first field of view angle A of the first fisheye lens 40 is greater than the first stitching region angle P1, and the second field of view angle B of the second fisheye lens 50 is greater than the first stitching region angle P1. The plurality of arms are located within the stitching blind area 90 of the first fisheye lens 40 and the second fisheye lens 50 in the deployed mode. Therefore, the panoramic image synthesized by the first fisheye lens 40 and the second fisheye lens 50 does not include other components of the panoramic UAV 100, including the plurality of arms, thereby achieving unobstructed panoramic shooting. It should be noted that due to the severe image distortion at the field of view boundary of the fisheye lens, the panoramic video effect formed by stitching the stitching region after removing the field of view boundary area is better. In addition, the image of the stitching angle region 92 formed by the intersection of the first stitching region angle P1 and the second stitching region angle P2 will be removed and will not be included in the panoramic video formed after stitching.

It should be noted that the field of view angles A, B of the first fisheye lens 40 and the second fisheye lens 50, and the first and second stitching region angles P1, P2 in the implementations of the present disclosure can all be the same, partially the same, or all different, and can be adjusted correspondingly according to the structure setting of the panoramic UAV 100.

Please refer to FIGs. 1 and 3. The top shell 11 includes a first top shell part 111, a second top shell part 112, and a third top shell part 113. The second top shell part 112 is connected between the first top shell part 111 and the third top shell part 113, and the second top shell part 112 is recessed inward. The portion of the third top shell part 113 that is farthest from a plane where the supporting surface 15 is located is closer to the plane where the supporting surface 15 is located than the portion of the first top shell part 111 that is farthest from the plane where the supporting surface 15 is located. The first fisheye lens 40 is convexly arranged on the portion of the first top shell part 111 farthest from the plane where the supporting surface 15 is located and is inclined towards the third top shell part 113. In one implementation, the first top shell part 111 and the third top shell part 113 are convex curved surfaces, and the second top shell part 112 is a concave curved surface. The protruding curvature of the third top shell part 113 is smaller than that of the first top shell part 111. Thus, the first fisheye lens 40 is located at the highest point of the top shell 11, making the second top shell part 112 and the third top shell part 113 located outside the first field of view region 60 of the first fisheye lens 40.

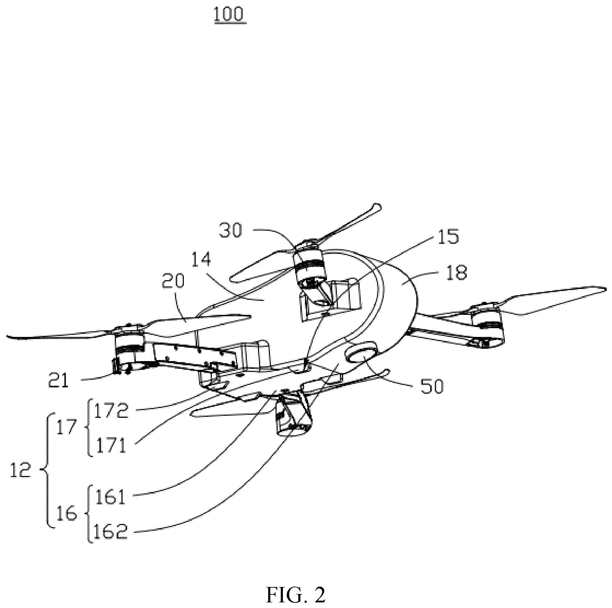

Please refer to FIG. 2. The bottom shell 12 includes a base shell 16 and a plurality of supporting parts 17 arranged on the base shell 16. The second fisheye lens 50 is arranged on the base shell 16, and a surface of the supporting part 17 away from the base shell 16 is the supporting surface 15. The base shell 16 includes a first base shell part 161 and a second base shell part 162. The second base shell part 162 is connected to the first base shell part 161 and inclined towards the top shell 11. The second base shell part 162 can be a concave surface, convex surface, or inclined surface, and the second fisheye lens 50 is arranged on the second base shell part 162. Accordingly, the second fisheye lens 50 is arranged in the recessed part of the base shell 16. When the panoramic UAV 100 lands, it can prevent the second fisheye lens 50 from contacting the landing surface 200, thereby preventing the second fisheye lens 50 from being damaged or scratched by the hard landing surface 200. In one implementation, the second base shell part 162 is a concave surface, and the central axis of the second fisheye lens 50 coincides with a normal vector of the second base shell part 162. Thus, the second fisheye lens 50 can be arranged at the most recessed part of the second base shell part 162, thereby minimizing the distance between the supporting surface 15 and the top shell 11 while maximizing the protection of the second fisheye lens 50. Further, the central axis of the second fisheye lens 50 also coincides with the central axis of the first fisheye lens 40. Thus, the second fisheye lens 50 and the first fisheye lens 40 can be arranged almost symmetrically on the body 10, so that the panoramic UAV 100 obtains a better visual effect.

As shown in FIG. 2, the plurality of supporting parts 17 include a first supporting part 171 and a second supporting part 172. The number of the first supporting part 171 and the second supporting part 172 are both two, and the two first supporting parts 171 and the two second supporting parts 172 are respectively located on two sides of the second fisheye lens 50. It can be understood that the number of the first supporting part 171 and the second supporting part 172 is not limited to two, and can be one or more. The number of the first supporting part 171 and the second supporting part 172 can also be different, such as setting one supporting part 171 and two second supporting parts 172. As shown in FIG. 5, the first supporting part 171 is located between the second fisheye lens 50 and the second supporting part 172, and the center of gravity of the panoramic UAV 100 is located between the first supporting part 171 and the second supporting part 172. In this implementation, the distance between the supporting surface 15 of the second supporting part 172 and the base shell 16 is less than the distance between the supporting surface 15 of the first supporting part 171 and the base shell 16. Thus, after the panoramic UAV 100 lands, under the action of gravity, the end of the panoramic UAV 100 near the second supporting part 172 will approach the landing surface 200, while the end near the first supporting part 171 will move away from the landing surface 200. Correspondingly, the second fisheye lens 50 will also be lifted and moved away from the landing surface 200, thereby further protecting the second fisheye lens 50. In one implementation, the first fisheye lens 40 and the second fisheye lens 50 are located on one end of the panoramic UAV 100, while components such as the battery and/or the main control board of the panoramic UAV 100 are located at the other end of the panoramic UAV 100, so that the center of gravity of the panoramic UAV 100 is located between the first supporting part 171 and the second supporting part 172.

In another implementation, the bottom shell 12 includes the aforementioned base shell 16 but does not include the aforementioned supporting part 17. The second fisheye lens 50 is arranged on the base shell 16, and a surface of the first base shell part 161 away from the top shell 11 is the supporting surface 15. The second fisheye lens 50 is located at one end of the panoramic UAV 100, and the center of gravity of the panoramic UAV 100 is located at the other end away from the second fisheye lens 50. After the panoramic UAV 100 lands, the end away from the second fisheye lens 50, including part of the first base shell part 161, approaches the landing surface 200 and contacts the landing surface 200, while the end where the second fisheye lens 50 is located is slightly tilted up to protect the second fisheye lens 50.

As shown in FIGs. 1 and 2, the plurality of arms include two first arms 20. The two first arms 20 are respectively connected to the first side shell 13 and the second side shell 14. A surface of each first arm 20 at an end away from the top shell 11 is a grounding surface 21. In the deployed mode, the grounding surface 21 is coplanar with the supporting surface 15 of the first supporting part 171. As shown in FIG. 3, when the panoramic UAV 100 just lands on the ground, that is, when the plurality of arms are in the deployed mode, the grounding surface 21 of the two first arms 20 and the two first supporting parts 171 contact the landing surface 200 to support the panoramic UAV 100. At this time, the second fisheye lens 50 is located between the plane where the supporting surface 15 of the first supporting part 171 is located and the top shell 11, so that there is a certain distance between the second fisheye lens 50 and the landing surface 200, avoiding direct contact between the second fisheye lens 50 and the landing surface 200, thereby preventing objects on the landing surface 200 from scratching the second fisheye lens 50. Further, the plurality of arms also include two second arms 30. The two second arms 30 are respectively connected to the first side shell 13 and the second side shell 14. The two second arms 30 are arranged closer to the top shell 11 than the two first arms 20. The two first arms 20 are located on a side of the first supporting part 171 away from the second fisheye lens 50, and the two second arms 30 are located on a side of the first supporting part 171 close to the second fisheye lens 50. Thus, the second arms 30 and the first arms 20 are staggered, which ensures that the second arms 30 will not interfere with the first arms 20 and reduces the space occupied by the arms in the length direction of the body 10 in the meantime, thereby making the structure of the panoramic UAV 100 more compact. It can be understood that the number of the first arms 20 and the second arms 30 is not limited to two and can be more than two, as long as they are arranged in groups on the first side shell 13 and the second side shell 14.

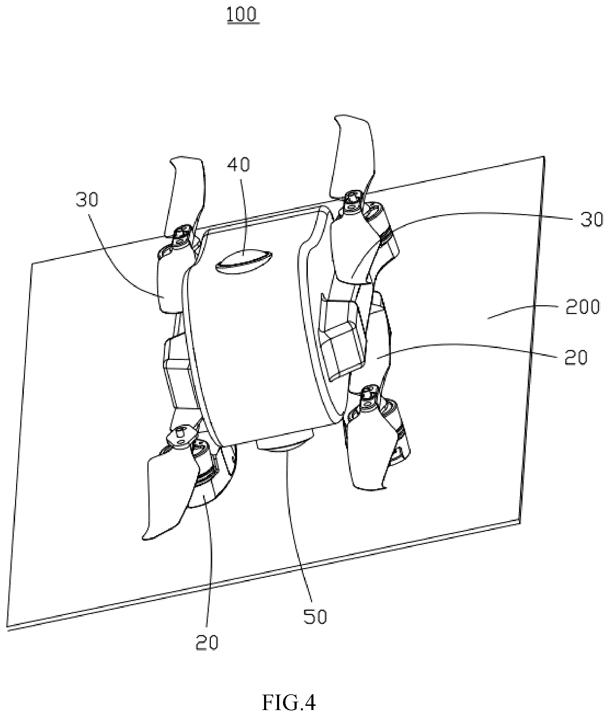

In one implementation, the plurality of arms only have a deployed mode, and the plurality of arms are fixedly connected to the body 10. Please also refer to FIGs. 1 and 4. In this implementation, the plurality of arms not only include a deployed mode but also have a stowed mode. In this implementation, the plurality of arms are foldably connected to the first side shell 13 and the second side shell 14. Each arm includes a rotating arm 21 rotatably connected to the side shell and a blade 22 rotatably connected to an end of the rotating arm 21 away from the side shell. When the panoramic UAV 100 transitions from the deployed mode to the stowed mode, the rotating arm 21 of the first arm 20 and the rotating arm 21 of the second arm 30 rotate towards each other and close to their respective side shells until the rotating arms 21 of each arm are arranged parallel or nearly parallel to the side shell.

Please refer to FIG. 6. When the plurality of arms are in the stowed mode, the second fisheye lens 50 is located between the two first arms 20, and the grounding surface 21 is located between the supporting surface 15 of the first supporting part 171 and the top shell 11. In the stowed mode, since the second fisheye lens 50 is located between the two first arms 20, the second lens is shielded between the two first arms 20 in the projection direction towards the side wall, thereby protecting the second fisheye lens 50 from the side. In the stowed mode, as the grounding surface 21 is located between the supporting surface 15 of the first supporting part 171 and the top shell 11, when the panoramic UAV 100 lands and the arms are folded, the first arm 20 has a certain distance from the landing surface 200, and the first arm 20 will no longer support the panoramic UAV 100. When the panoramic UAV 100 transitions from the deployed mode to the stowed mode after landing, the grounding surface 21 of the first arm 20 and the supporting surface 15 of the first supporting part 171 contact the landing surface 200 to support the panoramic UAV 100. Then, the folding of the first arm 20 raises the first arm 20 relative to the landing surface 200. At the same time, since the center of gravity of the panoramic UAV 100 is located between the first supporting part 171 and the second supporting part 172, the end of the panoramic UAV 100 away from the second fisheye lens 50 approaches the landing surface 200, and the supporting surface 15 of the second supporting part 172 replaces the grounding surface 21 of the first arm 20 and the supporting surface 15 of the first supporting part 171 to contact the landing surface 200 to support the panoramic UAV 100.

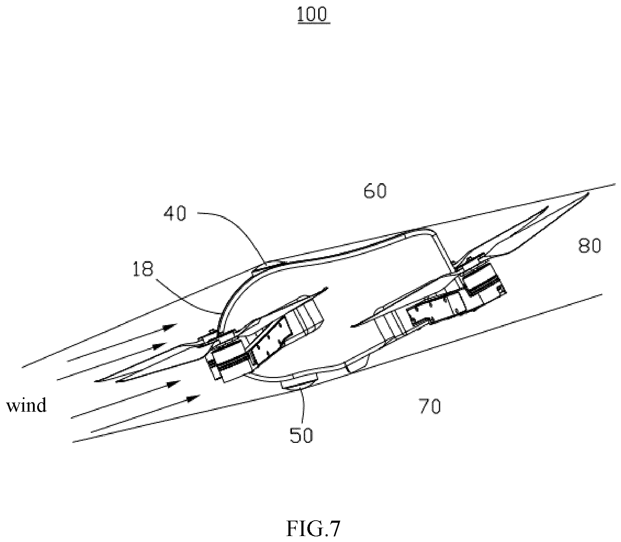

Please refer to FIGs. 1 and 7. The first side shell 13 and the second side shell 14 extend along the length direction of the body 10 beyond the top shell 11 and the bottom shell 12. The body 10 further includes a front shell 18. The front shell 18 is connected to the top shell 11 and the bottom shell 12 at an end close to the second fisheye lens 50 and is connected with the first side shell 13 and the second side shell 14. The front shell 18 is a convex curved surface, achieving a smooth transition from the bottom shell 12 to the bottom shell 12. Thus, when the panoramic UAV 100 just takes off, it can effectively reduce air resistance, reduce power consumption, and extend the endurance time of the panoramic UAV 100.

In the deployed mode, parts of the panoramic UAV 100 other than the first fisheye lens 40 and the second fisheye lens 50 are located within the stitching blind area 90, so that the first fisheye lens 40 and the second fisheye lens 50 are not blocked by the arms during shooting, thereby achieving panoramic shooting. Additionally, the panoramic UAV 100 completely locates the second fisheye lens 50 on the bottom shell 12 between the plane where the top shell 11 and the supporting surface 15 on the bottom shell 12 are located. When the panoramic UAV 100 lands, the supporting surface 15 contacts the landing surface 200, such as the ground or a table, and the second fisheye lens 50 does not contact the landing surface 200, thereby protecting the second fisheye lens 50. Compared with the panoramic UAV 100 in the related art, which protects the lens by setting a telescopic structure, the panoramic UAV 100 described above has a simple structure for protecting the second fisheye lens 50, reducing the overall weight of the panoramic UAV 100, thereby enhancing the endurance time of the panoramic UAV 100.

Although certain features and aspects of exemplary implementations have been described, those skilled in the art will recognize that many modifications are possible. For example, the methods and processes described in the present disclosure can be implemented using hardware components, software components, and/or any combination thereof. Furthermore, although various methods and processes have been described concerning specific structural and/or functional components, the methods provided by the various implementations are not limited to any specific structural and/or functional architecture but can be implemented in any suitable hardware, firmware, and/or software configuration. Similarly, although certain functions are attributed to certain system components, unless the context indicates otherwise, the function may be distributed among various other system components according to several implementations.

Furthermore, for convenience of description, although the methods and processes of the present disclosure have been described in a specific order, unless the context indicates otherwise, various processes may be reordered, added, and/or omitted according to various implementations. Moreover, processes described concerning one method or process may be incorporated into other described methods or processes; however, the present disclosure is not limited to this. Similarly, although various implementations have been described with or without certain features, the various components and/or features described concerning specific implementations herein may be replaced, added, and/or removed unless the context indicates otherwise. Therefore, although several exemplary implementations have been described above, it should be understood that the present disclosure is intended to cover all modifications and equivalent forms within the scope of the appended claims.

## Claims

1. A panoramic Unmanned Aerial Vehicle (UAV), **characterized in that** the panoramic UAV comprises:
a body, comprising a top shell, a bottom shell, and a side shell connected between the top shell and the bottom shell, wherein the bottom shell comprises a supporting surface away from the top shell, and the side shell comprises a first side shell and a second side shell arranged opposite to each other;
a plurality of arms, connected to the first side shell and/or the second side shell, the plurality of arms having a deployed mode;
a first fisheye lens, arranged on the top shell, the first fisheye lens comprising a first field of view region and a first stitching region not exceeding a range of the first field of view region; and
a second fisheye lens, arranged on the bottom shell and located completely between the top shell and a plane where the supporting surface is located, the second fisheye lens comprising a second field of view region and a second stitching region not exceeding a range of the second field of view region,
the panoramic UAV being **characterized in that** a region not covered by either the first stitching region or the second stitching region forms a stitching blind area, and when the plurality of arms are in the deployed mode, parts of the panoramic UAV other than the first fisheye lens and the second fisheye lens are located within the stitching blind area.

2. The panoramic UAV according to claim 1, **characterized in that** the panoramic UAV comprises a battery and a main control board, the first fisheye lens and the second fisheye lens are located at one end of the panoramic UAV, and the battery and/or the main control board are located at the other end of the panoramic UAV.

3. The panoramic UAV according to claim 1, **characterized in that** the bottom shell comprises a base shell and a supporting part arranged on the base shell, and a surface of the supporting part away from the base shell is the supporting surface.

4. The panoramic UAV according to claim 3, **characterized in that** the supporting part comprises a first supporting part and a second supporting part, the first supporting part is located between the second fisheye lens and the second supporting part, a center of gravity of the panoramic UAV is located between the first supporting part and the second supporting part, and a distance between the supporting surface of the second supporting part and the base shell is less than a distance between the supporting surface of the first supporting part and the base shell.

5. The panoramic UAV according to claim 4, **characterized in that** the plurality of arms comprise two first arms, the two first arms are respectively connected to the first side shell and the second side shell, and a surface of each first arm at an end away from the top shell is a grounding surface, and in the deployed mode, the grounding surface is coplanar with the supporting surface of the first supporting part.

6. The panoramic UAV according to claim 5, **characterized in that** the plurality of arms further comprise two second arms, the two second arms are respectively connected to the first side shell and the second side shell, the two second arms are arranged closer to the top shell than the two first arms, the two first arms are located on a side of the first supporting part away from the second fisheye lens, and the two second arms are located on a side of the first supporting part close to the second fisheye lens.

7. The panoramic UAV according to claim 6, **characterized in that** the plurality of arms are foldably connected to the first side shell and the second side shell, the plurality of arms further have a stowed mode, and when the plurality of arms are in the stowed mode, the second fisheye lens is located between the two first arms, and the grounding surface is located between the supporting surface of the first supporting part and the top shell.

8. The panoramic UAV according to claim 7, **characterized in that** each arm comprises a rotating arm rotatably connected to the side shell and a blade rotatably connected to an end of the rotating arm away from the side shell, and in the stowed mode, the rotating arm of the first arm and the rotating arm of the second arm rotate towards each other and close to their respective side shells.

9. The panoramic UAV according to claim 4, **characterized in that** a number of the first supporting part and a number of the second supporting part are both two, and the two first supporting parts and the two second supporting parts are respectively located on two sides of the second fisheye lens.

10. The panoramic UAV according to claim 1, **characterized in that** the bottom shell comprises a first base shell part and a second base shell part, the second base shell part is connected to the first base shell part and inclined towards the top shell, and the second fisheye lens is arranged on the second base shell part.

11. The panoramic UAV according to claim 10, **characterized in that** the second base shell part is a concave curved surface or an inclined surface, and a central axis of the second fisheye lens coincides with a normal vector of the second base shell part.

12. The panoramic UAV according to claim 1, **characterized in that** the top shell comprises a first top shell part, a second top shell part, and a third top shell part, the second top shell part is recessed between the first top shell part and the third top shell part, a portion of the third top shell part farthest from the plane where the supporting surface is located is closer to the plane where the supporting surface is located than a portion of the first top shell part farthest from the plane where the supporting surface is located, and the first fisheye lens is convexly arranged on the portion of the first top shell part farthest from the plane where the supporting surface is located and is inclined towards the third top shell part.

13. The panoramic UAV according to claim 12, **characterized in that** the first top shell part and the third top shell part are convex curved surfaces, and the second top shell part is a concave curved surface.

14. The panoramic UAV according to claim 1, **characterized in that** a central axis of the first fisheye lens coincides with a central axis of the second fisheye lens.

15. The panoramic UAV according to claim 1, **characterized in that** the body further comprises a front shell, the front shell is connected to the top shell and the bottom shell at an end close to the second fisheye lens, and the front shell is a convex curved surface.
